# EUROPÄISCHE PATENTANMELDUNG

(11) **EP 1 134 595 A2**
(43) Veröffentlichungstag der Anmeldung: **19.09.2001**
(21) Anmeldenummer: 01102832.1
(22) Anmeldetag: 13.02.2001
(51) Int. Cl.: G01S 17/46

(54) **Verfahren zum Erfassen von Abständen von Objekten mittels eines Triangulations-Sensors und Triangulations-Sensor zum Durchführen des Verfahrens**

(30) Priorität: 07.03.2000 DE 10011046
(71) Anmelder: Omron Corporation, Kyoto-shi, Kyoto-fu, 600-8530 (JP)
(72) Erfinder: Adamietz, Hubert, 73760 Ostfildern (DE); Stauss, Gerold, 71083 Herrenberg (DE); Ojemann, Folke, 73760 Ostfildern (DE)
(74) Vertreter: Patentanwälte Ruff, Wilhelm, Beier, Dauster & Partner

(57) **Zusammenfassung**

Bei einem Verfahren zum Erfassen von Abständen von Objekten mittels eines Triangulations-Sensors werden wenigstens zwei das von einem Sender ausgesandtes und von einem Objekt reflektiertes Licht empfangende PDs (1, 2) vorgesehen, die auf unterschiedliche Erfassungsweiten eingestellt sind und deren Signale (a, b) derart miteinander verknüpft sind, dass ein über die gesamte Erfassungsweite annähernd lineare Verlauf des Abstandssignals (D) erhalten wird.

## Beschreibung

Die Erfindung betrifft ein Verfahren zum Erfassen von Abständen von Objekten mittels eines Triangulations-Sensors, bei welchem von einem Sender ausgesandtes, von einem Objekt reflektiertes Licht von einem optischen Detektor aufgefangen und zu einem Abstandsignal ausgewertet wird, sowie einen Triangulations-Sensor.

In der Automatisierungs-Technik werden zunehmend optische Taster mit Hintergrundausblendung und Vordergrundausblendung eingesetzt. Die Anwender verlangen nach Tastern mit kleinen Gehäuseabmessungen, hoher Fremdlichtimmunität sowie einen in großen Bereichen elektronisch einstellbaren Tastabstand. Die bekannten Triangulations-Taster mit PSD haben einen relativ engen Tastbereich, in welchem eine gute Auflösung gegeben ist, d.h. die Signaländerung in Abhängigkeit von einer Änderung des Objektabstandes relativ groß ist. Der Verlauf des Abstandsignals ist jedoch in Abhängigkeit von dem ObjektAbstand sehr stark nicht linear.

Es sind mechanisch einstellbare Triangulations-Taster bekannt, bei welchen der Tastbereich durch mechanisches Verstellen der PD, der Optik und/oder des Senders eingestellt werden kann. Derartige Triangulations-Taster bieten jedoch praktisch keine Möglichkeit zur Implementierung in einer Anlage, bei welcher ein Tastbereich elektronisch einstellbar sein soll.

Der Erfindung liegt die Aufgabe zugrunde, ein Verfahren der eingangs genannten Art und einen Triangulations-Sensor zu schaffen, die einen großen Erfassungsbereich haben, innerhalb von welchem elektronisch ein Wert oder ein Bereich eines Wertes auswählbar und einstellbar ist.

Diese Aufgabe wird bezüglich des Verfahrens dadurch gelöst, dass das reflektierte Licht mittels wenigstens zwei optischen Detektoren aufgefangen wird, die auf unterschiedliche Erfassungsbereiche eingestellt sind und deren Signale derart miteinander verknüpft werden, dass ein über den gesamten Erfassungsbereich annähernd linearer Verlauf des Abstandssignals erhalten wird.

Eine andere Lösung des Verfahrens besteht darin, dass wenigstens zwei für unterschiedliche Erfassungsweiten relativ zu einem optischen Detektor angeordnete Sender Licht aussenden, und dass die von dem reflektierten Licht der wenigstens zwei Sender erhaltenen Signale derart miteinander verknüpft werden, dass über den gesamten Erfassungsbereich ein angenähert linearer Verlauf des Abstandssignals erhalten wird. Bevorzugt werden die Sender zeitgemultiplext.

Mittels beider Verfahren lässt sich ein einheitlicher Triangulations-Sensor verwirklichen, der über einen großen Erfassungsbereich eine angenähert lineare Kennlinie aufweist, so dass es möglich ist, elektronisch innerhalb dieses Erfassungsbereiches einen für eine zu lösende Automatisierungsaufgabe geforderten Bereich einer Erfassungsweite oder eine exakt vorgegebene Erfassungsweite auszuwählen.

Weitere Merkmale und Vorteile der Erfindung ergeben sich aus der nachfolgenden Beschreibung des in der Zeichnung dargestellten Ausführungsbeispiels.
- Fig. 1: zeigt in schematischer Darstellung einen Triangulations-Sensor mit einem Sender und zwei optischen Detektoren,
- Fig. 2: die Abbildung von Lichtpunkten auf den optischen Detektoren des Triangulations-Sensors der Fig. 1,
- Fig. 3: ein Prinzip der Auswertung der empfangenen Signale ,
- Fig. 4: ein Diagramm zur Erläuterung des angenähert linearen Verlaufes der Kennlinie des Abstandssignals des erfindungsgemäßen Triangulations-Sensors,
- Fig. 5: ein die Empfindlichkeit darstellendes Diagramm bei fokussierter Abbildung und
- Fig. 6: ein die bei defokussierter Abbildung die Empfindlichkeit aufzeigendes Diagramm.

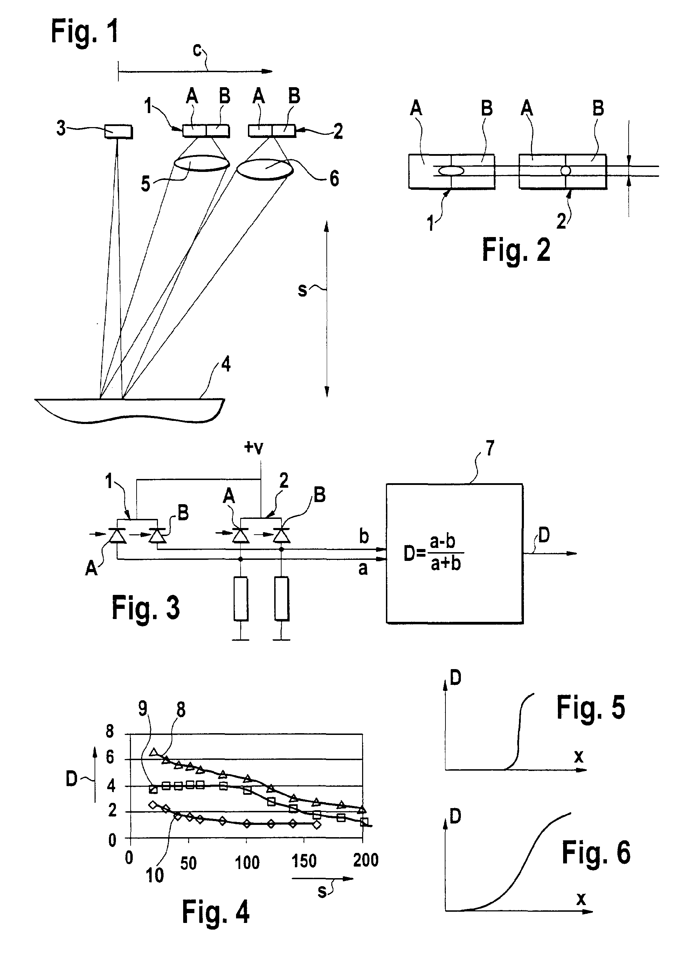

Der in Fig. 1 schematisch dargestellte Triangulations-Sensor besitzt zwei optische Detektoren 1, 2 mit Kanälen A und B und einen Sender 3, der beispielsweise ein LED (Light Emitting Diode) ist. Der von dem Sender 3 ausgesandte, in nicht näher dargestellter Weise parallelisierte Lichtstrahl wird von einem Objekt 4 reflektiert oder remittiert und von den optischen Detektoren 1 und 2 aufgefangen. Den optischen Detektoren 1, 2 ist jeweils eine Sammeloptik 5, 6 zugeordnet, die später noch erläutert werden wird.

Die optischen Detektoren 1, 2 sind in unterschiedlichen Basisabständen c zu dem Sender 3 angeordnet, wodurch sie auf unterschiedliche Erfassungsweiten eingestellt sind. Der kleinere Basisabstand c, der für den Detektor beispielsweise in der Größenordnung von 30mm liegt, ist kleinen Erfassungsweiten zugeordnet, während der größere Basisabstand c, von beispielsweise 50mm, für große Erfassungsweiten zuständig ist.

Als optische Detektoren 1 und 2 werden PSD (Position Sensing Devices) oder PDs (Differenz-Photodioden) oder ähnliche Detektoren eingesetzt, gegebenenfalls auch einzeilige CCDs. Wie in dem Schaltbild nach Fig. 3 dargestellt ist, bilden die optischen Detektoren 1, 2, die vorzugsweise PDs mit Kanälen A und B sind, jeweils zwei Signale a und b, die addiert und in der Auswertung 7 nach der Formel D=(a-b)/(a+b) zu dem Abstandssignal D ausgewertet werden. Der Verlauf dieses Signals D über der Erfassungsweite S ist als Kurve 8 in dem Diagramm nach Fig. 4 aufgetragen. Wie aus Fig. 4 zu ersehen ist, ist der Verlauf dieses Signals D über die Erfassungsweite S angenähert linear. Im Vergleich dazu sind noch die Kurven 9 und 10 in das Diagramm nach Fig. 4 eingetragen worden, von welchen die Kurve 9 den Verlauf des Abstandssignals der PD 2 und die Kurve 10 den Verlauf des Abstandssignals der PD 1 darstellt. Diese Kurven sind dadurch gewonnen worden, dass jeweils die andere PD abgedeckt wurde.

Wenn der auf einer PD 1 oder 2 abgebildete, von dem Objekt remittierte Lichtpunkt (Spot) im Fokus liegt, d.h. als kleiner Spot erscheint, so ist die Empfindlichkeit groß, wie in Fig. 5 dargestellt ist. Eine relativ kleine Änderung des Objektabstandes führt zu einer relativ großen Änderung des Signals D. Ist dagegen die Abbildung defokussiert, d.h. liegt der Fokus hinter der Abbildungsebene auf der PD 1 oder 2, so ist die Empfindlichkeit geringer, wie in Fig. 6 gezeigt ist. Im Vergleich zu der fokussierten Abbildung führt dann die gleiche Abstandsänderung zu einer geringeren Änderung des Signals D.

Der Signalverlauf entsprechend der Kurve 8 lässt sich aufgrund der vorstehend aufgezeigten Überlegungen dadurch noch verbessern, dass die Sammeloptiken 5, 6 mit dieser Zielsetzung relativ zu den jeweiligen PDs 1 und 2 angeordnet sind. Die Sammeloptik 5 ist so angeordnet, dass bei der größten Erfassungsweite der Abstand zur Sammeloptik 5 kleiner als die Fokuslänge ist. Dadurch wird die Abbildung des von dem Sender 3 ausgesandten und von dem Objekt 4 reflektierten Lichtpunktes auf der PD 1 mit abnehmendem Objektabstand größer (Fig. 6), was dazu führt, dass das Ausgangssignal dieser PD 1 in Abhängigkeit von der Flächenschwerpunktslage des reflektierten Lichts abflacht. In entsprechender Weise wird der Abstand der Sammeloptik 6 zu der PD 2 so gewählt, dass er etwa bei maximaler Erfassungsweite der Fokuslänge entspricht. Die PD 2 hat dann im Bereich größerer Erfassungsweiten eine höhere Empfindlichkeit und beeinflusst in diesem Bereich die Kurve 8 der Fig. 4 stärker als die PD 1. Die Empfindlichkeit der PD 2 ist im Bereich kleiner Erfassungsweiten dagegen deutlich geringer, was an der Kurve 9 der Fig. 4 zu sehen ist. In dem näheren Bereich ist der Einfluss der PD 1 auf das Signal D stärker, was aus der Kurve 10 der Fig. 4 zu erkennen ist. Dabei kann vorgesehen werden, dass die Abbildung auf der PD 1 im Nahbereich defokussiert bleibt, da im Nahbereich aufgrund der mit einer Änderung des Objektabstandes einhergehenden größeren Winkeländerung eine größere Signaländerung und damit eine erhöhte Empfindlichkeit gegeben sind.

Um das sogenannte "Kanten-Detektions-Problem" zu verringern, d.h. das Erkennen eines von der Seite her in den Erfassungsbereich einfahrenden Objekts, werden die Sammeloptiken 5, 6 so ausgebildet, dass die Abbildungen des Lichtstrahls auf der PD 1 lotrecht zur gemeinsamen Basis (lotrecht zur Zeichnungsebene der Fig. 1) im wesentlichen gleich sind. Das kann durch spezielle Linsen für die Sammeloptiken 5, 6 erhalten werden, vorzugsweise durch die Verwendung zylindrischer Linsenflächen (z.B. ist eine Seite der Linse rund-symmetrisch, während die andere zylindrisch ist). Dadurch wir eine anamorphotische Abbildung erhalten.

Eine noch stärkere Annäherung an einen linearen Verlauf des Abstandssignals kann dadurch erreicht werden, dass mehr als zwei optische Detektoren mit unterschiedlichen Basisabständen und/oder unterschiedlichen Fokuslängen eingesetzt werden. Darüber hinaus ist es selbstverständlich ohne weiteres möglich, die Signale a, b der PDs 1, 2 mittels Verstärkern vorzubereiten und erst danach zusammenzuführen.

Darüber hinaus ist es möglich, das Abstandssignal D nach einer anderen Formel auszuwerten, insbesondere nach der Formel D=a/(a+b).

Darüber hinaus ist es möglich, die Signale der einzelnen Kanäle A, B der Detektoren 1, 2 so zu verarbeiten, dass Fehlschaltungen des Tasters bei seitlicher Annäherung eines Objektes unterdrückt werden.

Im Prinzip das gleiche Ergebnis wird auch durch einen Triangulations-Sensor erhalten, bei welchem nur ein optischer Detektor vorgesehen ist, jedoch zwei oder mehr Sender, die in unterschiedlichen Basisabständen zu dem optischen Detektor angeordnet sind. In diesem Fall werden bevorzugt die von den zwei oder mehreren Sendern ausgesandten Lichtstrahlen zeitgemultiplext.

## Patentansprüche

1. Verfahren zum Erfassen von Abständen von Objekten mittels eines Triangulations-Sensors, bei welchem von einem Sender ausgesandtes, von einem Objekt reflektiertes Licht von einem Detektor aufgefangen und zu einem Abstandssignal ausgewertet wird, **dadurch gekennzeichnet, dass** das reflektierte Licht mittels wenigstens zwei optischen Detektoren aufgefangen wird, die auf unterschiedliche Erfassungsweiten eingestellt sind und deren Signale derart miteinander verknüpft werden, dass ein über die gesamte Erfassungsweite angenähert linearer Verlauf des Abstandssignals erhalten wird.

2. Verfahren zum Erfassen von Abständen von Objekten mittels eines Triangulations-Sensors, bei welchem von einem Sender ausgesandtes, von einem Objekt reflektiertes Licht von einem optischen Detektor aufgefangen und zu einem Abstandssignal ausgewertet wird, **dadurch gekennzeichnet, dass** wenigstens zwei für unterschiedliche Tastweiten relativ zu dem optischen Detektor angeordnete Sender Licht aussenden und dass die von dem reflektierten Licht der wenigstens zwei Sender erhaltenen Signale derart miteinander verknüpft werden, dass über die gesamte Erfassungsweite ein annähernd linearer Verlauf des Abstandssignals erhalten wird.

3. Triangulations-Sensor mit einem Sender und einem aus von einem Objekt reflektiertem Licht ein Abstandssignal bildenden optischen Detektor (1), dem eine Sammeloptik vorgeschaltet ist, **dadurch gekennzeichnet, dass** wenigstens ein weiterer optischer Detektor (2) vorgesehen ist, dass die optischen Detektoren (1, 2) auf unterschiedliche Erfassungsweiten eingestellt sind, und dass die Signale der Detektoren mittels einer Auswertung miteinander zu einem angenähert linearen Verlauf des Abstandssignals verknüpft sind.

4. Triangulations-Sensor nach Anspruch 3, **dadurch gekennzeichnet, dass** die optischen Detektoren (1, 2) in unterschiedlichen Basisabständen zu dem Sender (3) angeordnet sind.

5. Triangulations-Sensor nach Anspruch 3 oder 4, **dadurch gekennzeichnet, dass** die Sammeloptiken (5, 6) der Detektoren (1, 2) auf unterschiedliche Erfassungsweiten fokussiert sind.

6. Triangulations-Sensor nach Anspruch 5, **dadurch gekennzeichnet, dass** die Sammeloptik (6) des optischen Detektors (2), der einen größeren Basisabstand zum Sender (3) hat, auf den weitesten Erfassungsabstand fokussiert ist.

7. Triangulations-Sensor nach einem der Ansprüche 3 bis 6, **dadurch gekennzeichnet, dass** den Detektoren (1, 2) Sammeloptiken (5, 6) zugeordnet sind, die lotrecht zur gemeinsamen Basis eine annähernd gleiche Bündelungswirkung aufweisen.

8. Triangulations-Sensor mit einem Sender und mit einer aus von einem Objekt reflektiertem Licht ein Abtastsignal bildenden optischen Detektor, dem eine Sammeloptik vorgeschaltet ist, **dadurch gekennzeichnet, dass** wenigstens ein weiterer Sender vorgesehen ist, der bezüglich des ersten Senders in einem unterschiedlichen Basisabstand zu dem Detektor angeordnet ist und dass die aus dem reflektierten Licht gebildeten Signale des optischen Detektors mittels einer Auswertung zu einem angenähert linearen Verlauf des Abstandssignals verknüpft sind.
